# EUROPEAN PATENT APPLICATION

(11) **EP 4 660 676 A1**
(43) Date of publication of application: **10.12.2025**
(21) Application number: 25178171.2
(22) Date of filing: 22.05.2025
(51) Int. Cl.: G02B 6/38

(54) **FIBER OPTIC CABLE ASSEMBLY HAVING INTEGRATED FIBER PROTECTION FEATURES**

(30) Priority: 06.06.2024 US 202463656730 P
(71) Applicant: Corning Research & Development Corporation, Corning, New York 14831 (US)
(72) Inventor: ISENHOUR, Micah Colen, Lexington, 27295 (US); SHIRILLA, Daniel Charles, Hickory, 28601 (US)
(74) Representative: Reddie & Grose LLP

(57) **Abstract**

A fiber optic cable assembly having a fiber optic connector is disclosed. The fiber optic connector includes a crimp body having first and second crimp body portions. The first and second crimp body portions have respective mating surfaces and respective passageway portions that form a crimp body passageway when the first and second crimp body portions are assembled. The first mating surface includes one or more integrated guide members extending away from the first mating surface. The guide members are aligned with an inner surface of the first passageway portion to prevent optical fibers from being clamped between the mating surfaces when the first and second crimp body portions are assembled. The second crimp body portion may also include integrated guide members. A connector having such integrated guide members and a method of making a fiber optic cable assembly with such a connector are also disclosed.

## Description

### Priority Application

This application claims the benefit of priority of U.S. Provisional Application No. 63/656,730, filed on June 6, 2024, the content of which is relied upon and incorporated herein by reference in its entirety.

### Technical Field

This disclosure relates generally to fiber optic connectivity, and more particularly to a fiber optic connector, and fiber optic cable assemblies including such a fiber optic connector, having integrated fiber protection features that reduce the risk of damaging optical fibers during the assembly of the fiber optic connector to a fiber optic cable. The disclosure also relates to a fiber optic connector that is easier to initially assemble and repair/rework. The disclosure further relates to a method of making a fiber optic cable assembly with such a fiber optic connector.

### Background

The large amount of data and other information transmitted over the internet has led businesses and other organizations to develop large scale data centers for organizing, processing, storing and/or disseminating large amounts of data. Data centers contain a wide range of network equipment including, for example, servers, networking switches, routers, storage subsystems, *etc.* Data centers further include a large amount of cabling and equipment racks to organize and interconnect the network equipment in the data center. Modern data centers may include multi-building campuses having, for example, one primary or main building and a number of auxiliary buildings in close proximity to the main building. All the buildings on the campus are interconnected by a local fiber optic network.

Data center design and cabling-infrastructure architecture are increasingly large and complex. To manage the interconnectivity of a data center, the network equipment within the buildings on the data center campus is often arranged in structured data halls having a large number of spaced-apart rows. Each of the rows is, in turn, configured to receive a number of equipment racks or cabinets (e.g., twenty racks or cabinets) which hold the network equipment. In some data center architectures, each of the rows includes a main patch panel at a front or head end of the row. Distribution cables with a relatively large number of optical fibers (high fiber counts) are routed from a building distribution frame (sometimes referred to as a main distribution frame) to the main patch panels (sometimes part of cabinets or equipment referred to as an intermediate distribution frame) for the different rows of equipment racks. At the main patch panels, a large number of distribution fiber optic cables with lower fiber counts are connected to the optical fibers of the associated high fiber count distribution cable(s) and routed along the row to connect to the network equipment held in the various racks in the row. To organize the large number of in-row distribution fiber optic cables, each row typically includes a cable tray or basket disposed above the row for supporting the distribution fiber optic cables as they extend along the row. The network equipment in the racks is optically connected to the distribution fiber optic cables by technicians during the construction of the data center using a large number of cables.

Recent equipment rack architectures include a main rack patch panel near the top of the equipment rack (sometimes referred to as a "top of rack" switch) and a number of equipment patch panels (*e.g*., five, six or more; sometimes referred to as "switches") vertically arranged in the rack generally below the main rack patch panel. Each of the equipment patch panels holds network equipment which is to be optically connected to the distribution fiber optic cables extending along the row in the overhead cable trays. To achieve this connection, distribution fiber optic cables are routed to, for example, a rear of the main rack patch panel. The network equipment in the multiple vertically arranged equipment patch panels is then connected to the front of the main rack patch panel via separate fiber optic cables.

Because data centers are planned in advance, including the location of the network equipment in the cabinets or racks, the various connecting fiber optic cables, *e.g*., distribution cables, in-row distribution fiber optic cables, etc., may be pre-assembled in advance in predetermined lengths with fiber optic connectors located at one or both ends of the connecting cables. One data center may use thousands of connecting cables of varying length. Assembling the fiber optic connectors on the ends of the fiber optic cables may consume considerable time and effort to achieve a connection without damaging the optical fibers. Moreover, because thousands of fiber optic cables may be needed for a data center, there is a desire to have a quick and efficient method to assemble the fiber optic connectors at the ends of the fiber optic cables. Such a quick and efficient method, however, should not damage the optical fibers during assembly of the fiber optic connector. If a fiber optic cable is damaged during the assembly process it may not be identified until some time after the data center is completed and activated, which makes troubleshooting and repair difficult and expensive. For example, the design of current fiber optic connectors may crimp or crush some of the optical fibers during assembly of the connector to the end of the fiber optic cable. In many cases, this type of damage is progressive and becomes problematic a relatively short time after a data center is activated.

Furthermore, fiber optic connectors may also be damaged while the data center is operating, such as when a fiber optic connector is disconnected during maintenance operations. The design of current connectors does not lend itself to being easily repaired or reworked. If a damaged fiber optic connector cannot be readily repaired or reworked, the entire fiber optic cable assembly will need to be replaced with a new or refurbished cable assembly. Replacing the fiber optic cable assembly may take a considerable amount of time, and the new fiber optic cable assembly may be expensive relative to simply repairing or reworking the damaged fiber optic connector.

There is a need for a fiber optic connector that allows quick and efficient assembly of the connector to the end of the fiber optic cable without the connector damaging (e.g., crushing) the optical fibers during assembly. There is a further need for a fiber optic connector that allows the connector to be readily reworked should the connector be damaged during its service life.

### Summary

In one aspect of the disclosure, a fiber optic cable assembly is disclosed that provides quick and efficient assembly, protects the optical fibers from damage, and improves rework maintenance processes. The fiber optic cable assembly includes a fiber optic cable carrying a plurality of optical fibers and having a first end and a second end, and a fiber optic connector installed on one or both of the first end and the second end of the fiber optic cable. The fiber optic connector includes a ferrule to which the plurality of optical fibers are secured and a crimp body to which the end of the fiber optic cable is secured. The crimp body includes a first crimp body portion and a second crimp body portion which are assembled together to form the crimp body. The first crimp body portion and the second crimp body portion have a respective first mating surface and a second mating surface that are in contact or near contact when the first crimp body portion and the second crimp body portion are assembled. The first crimp body portion includes a first passageway portion adjacent the first mating surface and the second crimp body portion includes a second passageway portion adjacent the second mating surface. The first passageway portion and the second passageway portion form a crimp body passageway when the first crimp body portion and the second crimp body portion are assembled, and the plurality of optical fibers extend through the crimp body passageway to reach the ferrule. The first mating surface includes at least one first guide member extending away from the first mating surface. The at least one first guide member is aligned with an inner surface of the first passageway portion to urge the plurality of optical fibers toward the first passageway portion during assembly of the fiber optic connector to the fiber optic cable. This prevents one or more of the plurality of optical fibers from being clamped between the first and second mating surfaces when the first crimp body portion and the second crimp body portion are assembled.

In one embodiment, the at least one first guide member may include a plurality of first guide members. Additionally, the plurality of first guide members may be spaced from each other on the first mating surface. In one embodiment, the first mating surface may include a first mating surface portion extending along a first side of the first passageway portion and a second mating surface portion extending along a second side of the first passageway portion. The first mating surface portion may include at least one of the plurality of first guide members and the second mating surface portion may include at least one of the plurality of first guide members. In one embodiment, at least one of the first mating surface portion and the second mating surface portion may include a plurality of first guide members. In one embodiment, adjacent ones of the plurality of first guide members on the at least one of the first mating surface portion and the second mating surface portion may be spaced apart a distance less than or equal to about two millimeters.

In one embodiment, the at least one first guide member may include a surface that smoothly intersects with the inner surface of the first passageway portion. In this way, optical fibers that engage with the at least one first guide member may slide along the first guide member to enter the first passageway portion without catching on a step formed between the surface of the first guide member and the first mating surface. In one embodiment, for example, the surface of the at least one first guide member may be tangential to the first passageway portion. In another embodiment, the at least one first guide member may include a chamfer at a tip end of the at least one first guide member to guide or channel the optical fibers toward the first passageway portion. In yet another embodiment, the at least one first guide member may have a height, the plurality of optical fibers may each have a diameter, and the height of the at least one first guide member may be at least three times the diameter of the plurality of optical fibers.

In one embodiment, the second mating surface may include at least one second guide member extending away from the second mating surface. The at least one second guide member may be aligned with an inner surface of the second passageway portion to urge the plurality of optical fibers toward the first passageway portion during assembly of the fiber optic connector to the fiber optic cable. This prevents one or more of the plurality of optical fibers from being clamped between the first and second mating surfaces when the first crimp body portion and the second crimp body portion are assembled. The at least one second guide member may include a plurality of second guide members, which may be spaced from each other on the second mating surface. The second mating surface may include a third mating surface portion extending along a first side of the second passageway portion and a fourth mating surface portion extending along a second side of the second passageway portion. The third mating surface portion may include at least one of the plurality of second guide members and the fourth mating surface portion may include at least one of the plurality of second guide members. At least one of the third mating surface portion and the fourth mating surface portion may include a plurality of second guide members and adjacent ones of the plurality of second guide members on the at least one of the third mating surface portion and the fourth mating surface portion may be spaced apart a distance less than or equal to about two millimeters.

In another embodiment, the at last one second guide member may include a surface that smoothly intersects with the inner surface of the second passageway portion. In this way, optical fibers that engage with the at least one second guide member may slide along the second guide member to enter the first passageway portion without catching on a step formed between the surface of the second guide member and the second mating surface. In one embodiment, for example, the surface of the at least one second guide member may be tangential to the second passageway portion. In another embodiment, the at least one second guide member may include a chamfer at a tip end of the at least one second guide member to guide or channel the optical fibers toward the first passageway portion. In yet another embodiment, the at least one second guide member may have a height, the plurality of optical fibers may each have a diameter, and the height of the at least one second guide member may be at least three times the diameter of the plurality of optical fibers.

In another embodiment, when the first crimp body portion and the second crimp body portion are assembled, each of the at least one first guide member may be adjacent to at least one of the at least one second guide member. In this embodiment, for example, the first guide members and the second guide members may be alternatingly interlaced with each other. This essentially creates a barrier that prevents the optical fibers from extending over the first and second mating surfaces, thereby avoiding the optical fibers from being clamped therebetween when the first crimp body portion and the second crimp body portion are assembled.

In some embodiments, the fiber optic connector further includes a first housing component coupled to the crimp body, and together the first housing component and the crimp body define a housing assembly. The first housing component may be releasably connected to the crimp body to assemble the fiber optic connector. For example, in such an embodiment, one of the first housing component or the crimp body may include at least one tab having a bore (e.g., blind bore or through bore) and the other of the first housing component or the crimp body may include at least one protrusion. The at least one protrusion may engage the bore on the at least one tab to releasably connect the first housing component and the crimp body. In this embodiment, when the first housing component is removed from the crimp body, a rear surface of the ferrule is at least six millimeters, and preferably at least nine millimeters, from a front surface of the crimp body. This increased amount of fiber length makes rework processes much easier and less costly.

In another aspect of the disclosure, a fiber optic connector configured to be installed on a plurality of optical fibers at an end of a fiber optic cable is disclosed. The fiber optic connector includes a ferrule configured to receive ends of the plurality of optical fibers . The fiber optic connector also includes a crimp body having first crimp body portion and a second crimp body portion configured to be assembled together to form the crimp body. The first crimp body portion and the second crimp body portion have a respective first mating surface and a second mating surface that are configured to be in contact or near contact when the first crimp body portion and the second crimp body portion are assembled. The first crimp body portion includes a first passageway portion adjacent the first mating surface and the second crimp body portion includes a second passageway portion adjacent the second mating surface. The first passageway portion and the second passageway portion are configured to form a crimp body passageway when the first crimp body portion and the second crimp body portion are assembled, and the plurality of optical fibers is configured to extend through the crimp body passageway to reach the ferrule. The first mating surface includes at least one first guide member extending away from the first mating surface and aligned with an inner surface of the first passageway portion to urge the plurality of optical fibers toward the first passageway portion during assembly of the fiber optic connector to the fiber optic cable. This prevents one or more of the plurality of optical fibers from being clamped between the first and second mating surfaces when the first crimp body portion and the second crimp body portion are assembled.

In one embodiment, the fiber optic connector further includes a first housing component coupled to the crimp body. The first housing component and the crimp body in such an embodiment define a housing assembly in which the ferrule is received.

In another aspect of the disclosure, a fiber optic connector configured to be installed on a plurality of optical fibers at an end of a fiber optic cable is disclosed. The fiber optic connector includes a ferrule configured to receive ends of the plurality of optical fibers. The fiber optic connector also includes a housing assembly that comprises a first housing component in which the ferrule is received and a crimp body coupled to the first housing component. The crimp body has a first crimp body portion and a second crimp body portion configured to be assembled together to form the crimp body. Additionally, the first crimp body portion and the second crimp body portion have a respective first mating surface and a second mating surface that are configured to be in contact or near contact when the first crimp body portion and the second crimp body portion are assembled. The first crimp body portion includes a first passageway portion adjacent the first mating surface and the second crimp body portion includes a second passageway portion adjacent the second mating surface. The first passageway portion and the second passageway portion are configured to form a crimp body passageway when the first crimp body portion and the second crimp body portion are assembled, and the plurality of optical fibers is configured to extend through the crimp body passageway to reach the ferrule.

In one embodiment, the first mating surface may include at least one first guide member extending away from the first mating surface and aligned with an inner surface of the first passageway portion to urge the plurality of optical fibers toward the first passageway portion during assembly of the fiber optic connector to the fiber optic cable. This prevents one or more of the plurality of optical fibers from being clamped between the first and second mating surfaces when the first crimp body portion and the second crimp body portion are assembled.

In another aspect of the disclosure, a method of making a fiber optic cable assembly from a fiber optic cable carrying a plurality of optical fibers and a fiber optic connector having a ferrule and a crimp body is disclosed. The crimp body has a first crimp body portion and a second crimp body portion configured to be assembled together to form the crimp body. The method includes: securing the plurality of optical fibers to the ferrule; and disposing the plurality of optical fibers in a first passageway portion of the first crimp body portion. The first crimp body portion includes at least one first guide member, and the disposing step using at least one first guide member to urge the plurality of optical fibers toward the first passageway portion as the plurality of optical fibers is being disposed therein. The method further includes assembling the first crimp body portion with the second crimp body portion to form the crimp body.

In one embodiment, connecting the first crimp body portion and the second crimp body portion may include providing at least one second guide member on the second crimp body portion and urging the plurality of optical fibers toward the first passageway portion using the at least one second guide member as the first crimp body portion and the second crimp body portion are being assembled. In one embodiment, connecting the first crimp body portion and the second crimp body portion may include using a crimp band to clamp the first crimp body portion and the second crimp body portion together.

In another aspect of the disclosure, a method of performing maintenance on a fiber optic cable assembly having a fiber optic cable carrying a plurality of optical fibers and a fiber optic connector having a ferrule and a housing assembly is disclosed. The housing assembly includes a first housing component and a crimp body releasably connected together, and the crimp body has a first crimp body portion and a second crimp body portion configured to be assembled together to form the crimp body. The method includes disconnecting the first housing component from the crimp body to expose a length of optical fibers greater than about six millimeters, and preferably greater than about nine millimeters, between a rear of the ferrule and a front of the crimp body, performing a rework step, and reconnecting the housing portion to the crimp body. The rework step includes any one or more of the following: polishing the ferrule, accessing the exposed length of optical fibers, or removing internal components of the fiber optic connector that are positioned between the ferrule and the crimp body.

In one embodiment, reworking the connection between the plurality of optical ferrules and the ferrule may be performed without removing a crimp band from the crimp body.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic illustration of a data center campus.
Fig. 2 is a partial perspective view of an embodiment of a data hall of the data center of Fig. 1.
Fig. 3 is a schematic view of an embodiment of a row of equipment racks of the data hall of Fig. 2.
Fig. 4 is an equipment rack having cable harnesses installed therein according to one embodiment of the disclosure.
Fig. 5A is a perspective view of a fiber optic cable with an MMC fiber optic connector.
Fig. 5B is an exploded, perspective view of the MMC fiber optic connector shown in Fig. 5A.
Fig. 6A is a disassembled perspective view of a housing assembly of the MMC fiber optic connector shown in Fig. 5B.
Fig. 6B is a perspective view of a crimp body portion of the MMC fiber optic connector shown in Fig. 6A.
Fig. 7A is an exploded, perspective view of a housing assembly of a MMC fiber optic connector having integrated optical fiber protection features according to one embodiment of the disclosure.
Fig. 7B is a perspective view of a crimp body portion of the MMC fiber optic connector shown in Fig. 7A.
Fig. 8 is an elevation view of the housing assembly shown in Figs. 7A and 7B.
Fig. 9 is a partially disassembled, elevational view of a MMC fiber optic connector with the shroud removed to expose the ferrule.
Fig. 10 is a perspective view of a MMC fiber optic connector according to another embodiment of the disclosure.
Fig. 11 is an exploded view of the fiber optic connector shown in Fig. 10.
Fig. 12 is a perspective view of the fiber optic connector shown in Fig. 10 with the housing portion disengaged from the crimp body.
Fig. 13 is a perspective view of the fiber optic connector shown in Fig. 10 with the housing portion engaged with the crimp body.
Fig. 14 is a perspective view of the fiber optic connector shown in Fig. 10 with the shroud and housing portion removed to expose the ferrule.

### Detailed Description

The exemplary embodiments described herein are provided for illustrative purposes and are not limiting. Other exemplary embodiments are possible, and modifications may be made to the exemplary embodiments within the scope of the present disclosure. Therefore, the description below is not meant to limit the scope of the present disclosure. In general, the description relates to a fiber optic connector and the assembly of that fiber optic connector to an end of a fiber optic cable to form a fiber optic cable assembly. The configuration of the fiber optic connector minimizes, if not eliminates altogether, the possibility of the fiber optic connector crimping or crushing the optical fibers carried by the fiber optic cable during assembly of the fiber optic connector thereto. In this regard, the fiber optic connector includes a crimp body having a two-part construction, with each part having a fiber passageway portion and a mating surface that engage or nearly engage each other when the two parts are assembled together. One or both of the mating surfaces include one or more integrated guide features that urge optical fibers that might be overlying the mating surfaces back toward the fiber passageway portions. In this way, the optical fibers do not become trapped between the mating surfaces and ultimately crushed when the two parts of the crimp body are assembled together.

The description also relates to a fiber optic connector whose configuration provides access to more fiber length when the fiber optic connector must be reworked, making the rework process easier and more efficient. In conventional fiber optic connectors, when the connector is disassembled for a rework process, the distance between the ferrule and the crimp body is small, e.g., on the order of just a few millimeters, which makes a rework process very difficult if not impossible. Thus, in many cases, the crimp body and crimp band have to be removed and an additional length of the fiber optic cable stripped to provide a sufficient length of optical fibers to perform the rework. This is time consuming and inefficient. A redesign of the fiber optic connector as described below increases the distance between the ferrule and crimp body within the fiber optic connector so that a rework process may be performed without removing the crimp body from the fiber optic cable. These and other aspects of the present disclosure will now be described in detail.

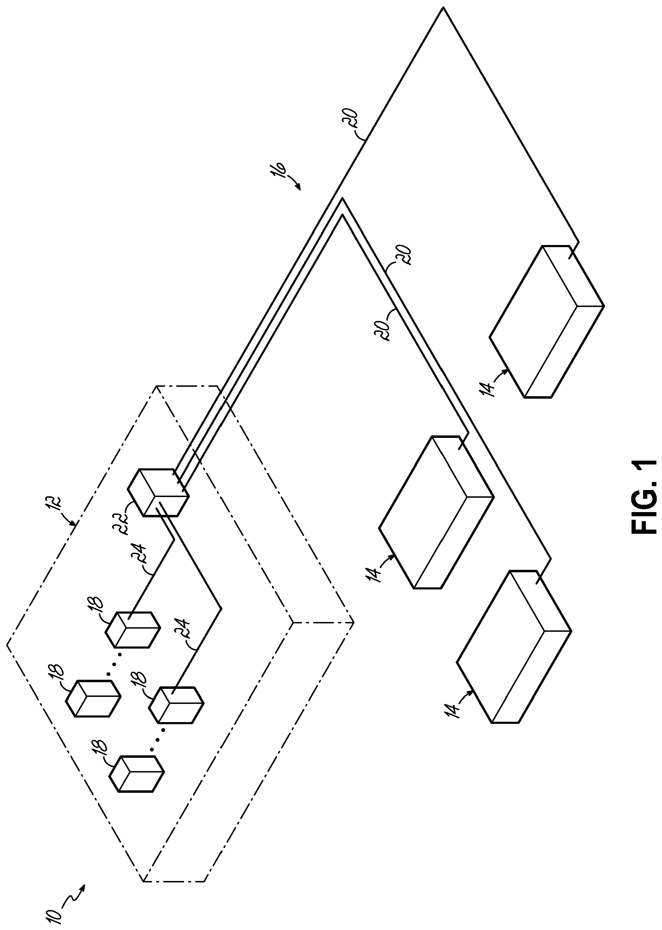

As illustrated in Fig. 1, a modern-day data center 10 may include a collection of buildings (referred to as a data center campus) having, for example, a main building 12 and one or more auxiliary buildings 14 in close proximity to the main building 12. While three auxiliary buildings are shown, there may be more or less depending on the size of the campus. The data center 10 provides for a local fiber optic network 16 that interconnects the auxiliary buildings 14 with the main building 12. The local fiber optic network 16 allows network equipment 18 in the main building 12 to communicate with various network equipment (not shown) in the auxiliary buildings 14. In the exemplary embodiment shown, the local fiber optic network 16 includes trunk cables 20 extending between the main building 12 and each of the auxiliary buildings 14. Conventional trunk cables 20 generally include a high fiber-count arrangement of optical fibers for passing data and other information through the local fiber optic network 16. In the example illustrated in Fig. 1, the trunk cables 20 from the auxiliary buildings 14 are routed to one or more distribution cabinets 22 housed in the main building 12 (one shown).

Within the main building 12, a plurality of indoor fiber optic cables 24 ("indoor cables 24") are routed between the network equipment 18 and the one or more distribution cabinets 22. The indoor cables 24 generally include a high fiber-count arrangement of optical fibers for passing data and other information from the distribution cabinets 22 to the network equipment 18. Although only the interior of the main building 12 is schematically shown in Fig. 1 and discussed above, each of the auxiliary buildings 14 may house similar equipment for similar purposes. Thus, although not shown, each of the trunk cables 20 may be routed to one or more distribution cabinets 22 in one of the auxiliary buildings 14 in a manner similar to that described above. Furthermore, each of the auxiliary buildings 14 may include indoor cables 24 that extend between network equipment 18 and the one or more distribution cabinets 22 of the auxiliary building 14.

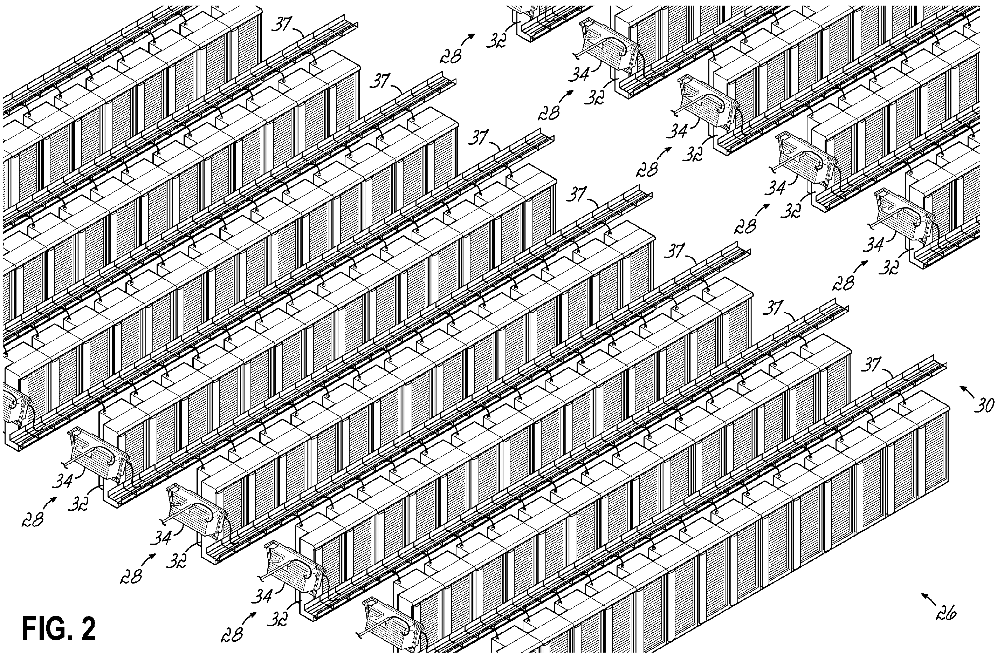

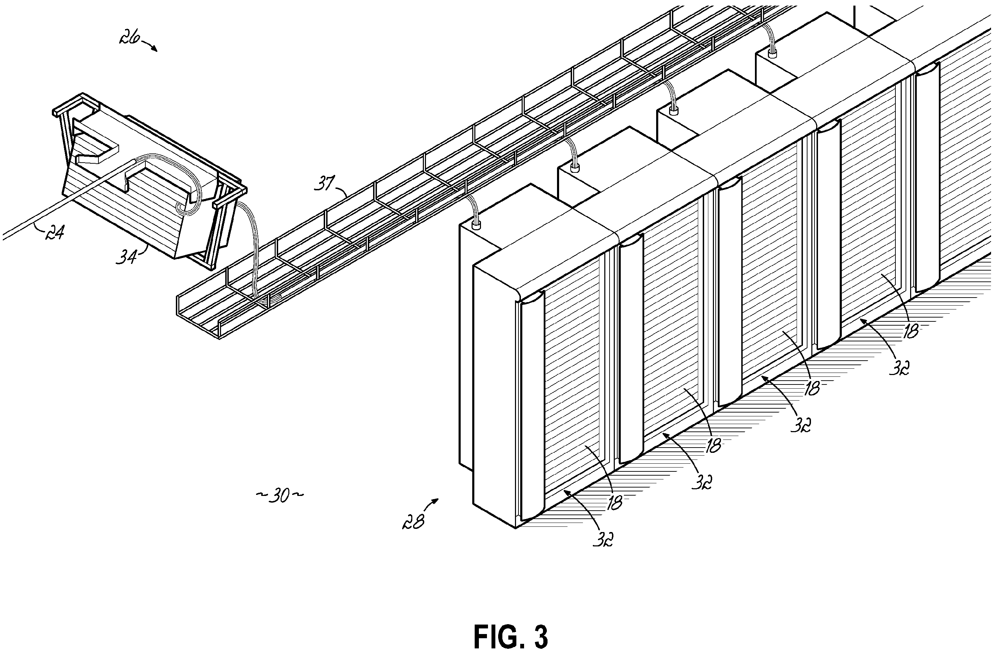

As illustrated in more detail in Figs. 2 and 3, the network equipment 18 in the main building 12 or an auxiliary building 14 may be arranged in one or more data halls 26 that generally include a plurality of spaced-apart rows 28 on one or both sides of an access pathway 30. The arrangement of the data halls 26 into rows 28 helps organize the large number of equipment, fiber optic cables, fiber optic connections, etc. Each of the rows 28 includes a plurality of equipment racks or cabinets 32 (referred to hereafter as "equipment racks 32" or "racks 32") generally arranged one next to the other along the row 28. Each of the equipment racks 32 is a vertically arranged framework for holding various network equipment 18 of the data center 10, as is generally known in the telecommunications industry.

In one common arrangement, and as further illustrated in Fig. 2, each row 28 may include a main patch panel 34 at the head end of the row 28 closest to the access pathway 30. The main patch panel 34 represents a termination point of at least some of the optical fibers carried by one or more of the indoor cables 24, for example. Although the main patch panel 34 is shown as being positioned above the row 28, in other embodiments the main patch panel 34 may be in a cabinet (not shown) at the head end of the row 28 or in the first equipment rack 32 at the head end of the row 28. In yet other embodiments, the main patch panel 34 may be located within the associated row, such as in the middle of the row, and be above, below, or within one of the equipment racks 32. As discussed above, in a conventional arrangement, one or more distribution cables 36 (only a representative one is shown in Figs. 2 and 3) are connected to the main patch panel 34 of a row 28 and routed along a cable tray 37 generally disposed above the row 28. The network equipment 18 in the equipment racks 32 is then optically connected to the one or more distribution cables 36 to provide the interconnectivity of the network equipment 18 of the data center 10.

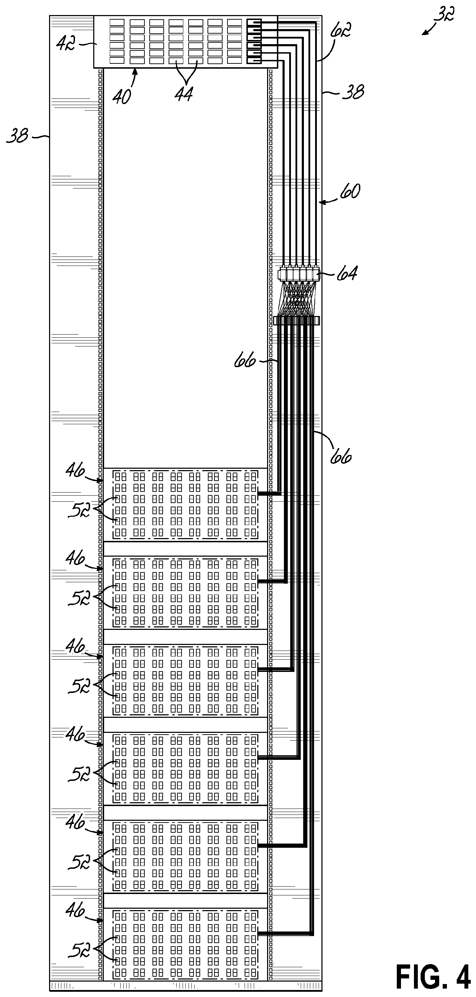

Fig. 4 illustrates an equipment rack 32 in accordance with an embodiment of the disclosure. The equipment rack 32 has a generally known construction and includes a plurality of vertical rails 38 that provide a framework for the equipment rack 32. In an exemplary embodiment, the equipment rack 32 includes a main rack patch panel 40 near a top of the equipment rack 32 that is configured to be connected to the one or more distribution cables 36 extending along the row 28 in the overhead cable trays 37. More particularly, the main rack patch panel 40 may include a rear interface (not shown) defining a plurality of connector interfaces or rear connector ports for making connections with the one or more distribution cables 36. The main rack patch panel 40 further includes a front interface 42 defining a plurality of front connector ports 44. Additionally, the equipment rack 32 typically includes a plurality of equipment patch panels 46 for receiving the network equipment 18 and securing the network equipment 18 to the vertical rails 38 of the equipment rack 32 (alternatively, the equipment patch panels 46 may be considered as part of an assembly that defines a piece of network equipment 18). In one embodiment, for example, the equipment rack 32 may include six equipment patch panels 46; however, the number may vary depending on the rack architecture. In one embodiment, the equipment patch panels 46 may be arranged below the main rack patch panel 40 in the equipment rack 32, but other arrangements may also be possible. The equipment patch panels may include a plurality of connector ports 52.

The equipment rack 32 includes a plurality of rack cable assemblies 60 (referred to hereafter as "rack cable harnesses 60" or "cable harnesses 60") that connect the connector ports 52 in the equipment patch panels 46 to the main rack patch panel 40 near the top of the equipment rack 32. The cable harness 60 generally includes a fiber optic cable assembly 62, a furcation housing 64, and a plurality of breakout legs 66. The fiber optic cable assembly 62 carries a plurality of optical fibers for passing data and other information through the local fiber optic network 16, and more specifically between the one or more distribution cables 36 of a row 28 and the network equipment 18 in an equipment rack 32 of the row 28. The number of optical fibers carried by the fiber optic cable assembly 62 and how the optical fibers are arranged within the fiber optic cable assembly 62 may vary based on the application.

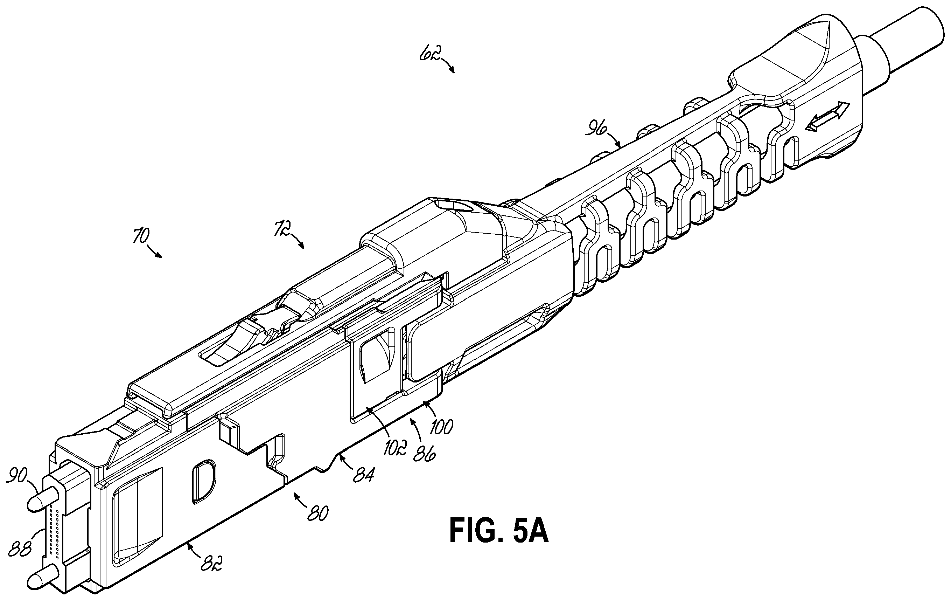

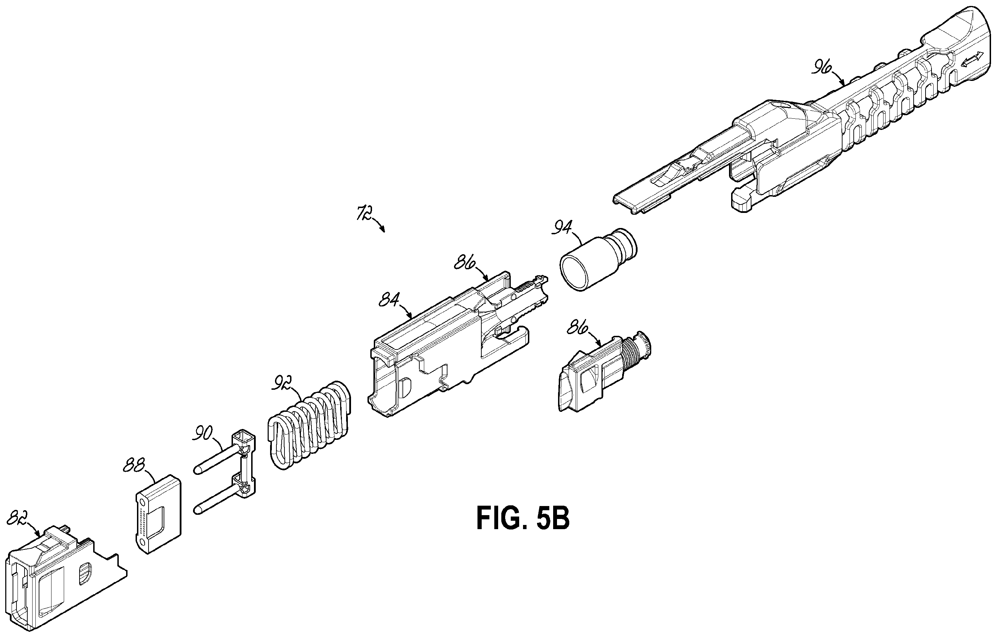

The fiber optic cable assembly 62 has first and second ends. A close-up of one of the first or second ends 70 of fiber optic cable assembly 62 is shown in Fig. 5A. The first or second end 70 of the fiber optic cable assembly 62 includes a fiber optic connector 72. The other end of the fiber optic cable assembly 62 may also include a connector, such as the fiber optic connector 72. The particular fiber optic connector 72 shown in Fig. 5A is a multifiber connector in the form of an MMC fiber optic connector sold by US Conec Ltd. Other fiber optic connectors 72, however, may be used on the end 70 of the fiber optic cable assembly 62, including other types of multifiber connectors, duplex connectors, and simplex connectors. Fig. 5B is an exploded view of the fiber optic connector 72 shown in Fig. 5A. The fiber optic connector 72 may include a housing assembly 80 comprising of a first housing component or body 82 (also referred to as a shroud for the particular embodiment shown) and a crimp body 86. The fiber optic connector 72 may further include a ferrule 88, a spring clamp subassembly 90, a spring 92, a crimp band 94, and boot subassembly 96.

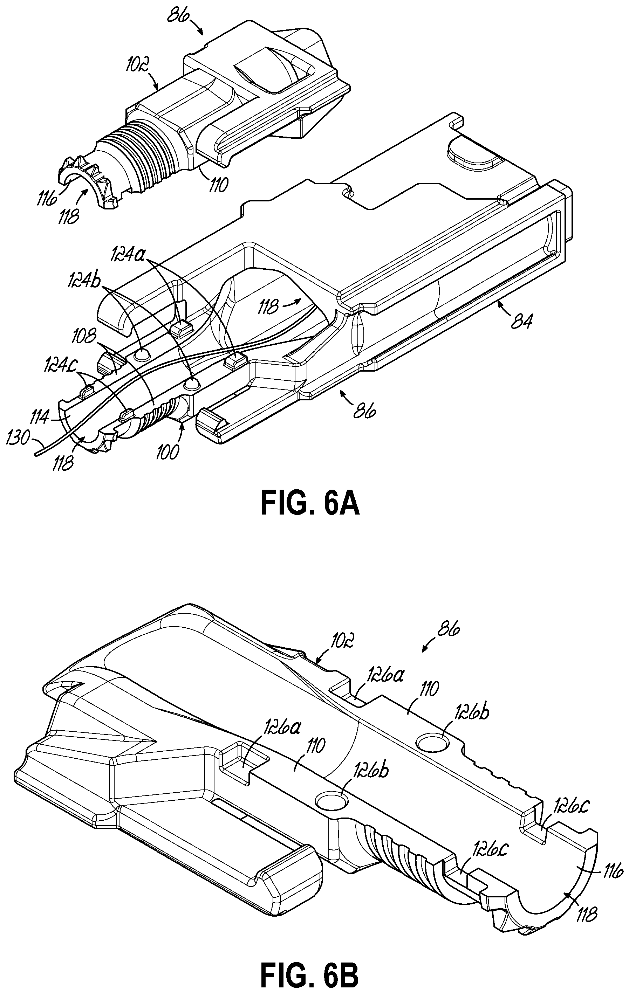

With reference to Figs. 6A and 6B, the crimp body 86 may have a two-part construction and include a first crimp body portion 100 and a second crimp body portion 102 assembled together. In the embodiment shown, the first crimp body portion 100 defines a housing portion 84 that interfaces with the first housing component 82. The crimp band 94 may be used to connect (e.g., clamp or secure) the second crimp body portion 102 to the first crimp body portion 100 in the assembled configuration. Alternatively or additionally, the first crimp body portion 100 and the second crimp body portion 102 may be secured together in the assembled state by using adhesive, snap-fit features, or other means. The first crimp body portion 100 includes a first mating surface 108 and the second crimp body portion 102 includes a second mating surface 110. The first mating surface and the second mating surface are configured to be in contact or near contact when the first crimp body portion 100 and the second crimp body portion 102 are assembled. The first crimp body portion 100 includes a first central passageway portion 114 and the second crimp body portion 102 includes a second central passageway portion 116. The first mating surface 108 extends along both sides of the first central passageway portion 114 and the second mating surface 110 extends along both sides of the second central passageway portion 116. The first central passageway portion 114 and second central passageway portion 116 form a section of a central passageway 118 when the second crimp body portion 102 is assembled to the first crimp body portion 100. The central passageway 118 extends through the crimp body 86(including the housing portion 84 defined by the first crimp body portion 100). In this embodiment, the first mating surface 108 may include raised protrusions 124a, 124b, 124c that are configured to fit within complimentary depressions 126a, 126b, 126c in the second mating surface 110. When the second mating surface 110 of the second crimp body portion 102 is placed on the first mating surface 108 of the first crimp body portion 100, the raised protrusions 124a, 124b, 124c are aligned with depressions 126a, 126b, 126c so that the second crimp body portion 102 is properly indexed onto and aligned with the first crimp body portion 100.

With further reference to Figs. 6A and 6B, as the fiber optic cable assembly 62 is being assembled, a plurality of optical fibers is placed along the first central passageway portion 114 in the first crimp body portion 100 with the second crimp body portion 102 removed to ease the placement of the optical fibers. When all the optical fibers are in place and extending along the first central passageway portion 114, the second crimp body portion 102 may be assembled to the first crimp body portion 100 to form the crimp body 86. Again, the raised protrusions 124a, 124b, 124c are aligned with and inserted inside the depressions 126a, 126b, 126c. In an exemplary manner, the optical fibers, depicted as 130 in Fig. 6A, are placed in the first central passageway portion 114 and through the section of the central passageway 118 that is defined by the housing portion 84. Because the optical fibers 130 are generally flexible and unrestrained as they pass along the first central passageway portion 114, portions of the optical fibers 130 may not reside fully within the first central passageway portion 114, but instead may overlie the first mating surface 108. Consequently, when the second crimp body portion 102 is placed over and assembled to the first crimp body portion 100, the portions of the optical fiber 130 overlying the first mating surface 108 may be contacted by the second mating surface 110 and, depending upon the force exerted, the optical fibers 130 may be damaged, such as crushed for example. That damage may not be discovered for some time after the fiber optic cable assembly 62 is constructed and placed in operation. It is believed that the low height and spacing of adjacent raised protrusions 124a, 124b, 124c are insufficient to prevent the optical fibers 130 from overlying the first mating surface 108 as the optical fibers 130 are placed along the first central passageway portion 114 and being damaged when the first crimp body portion 100 and the second crimp body portion 102 are assembled together.

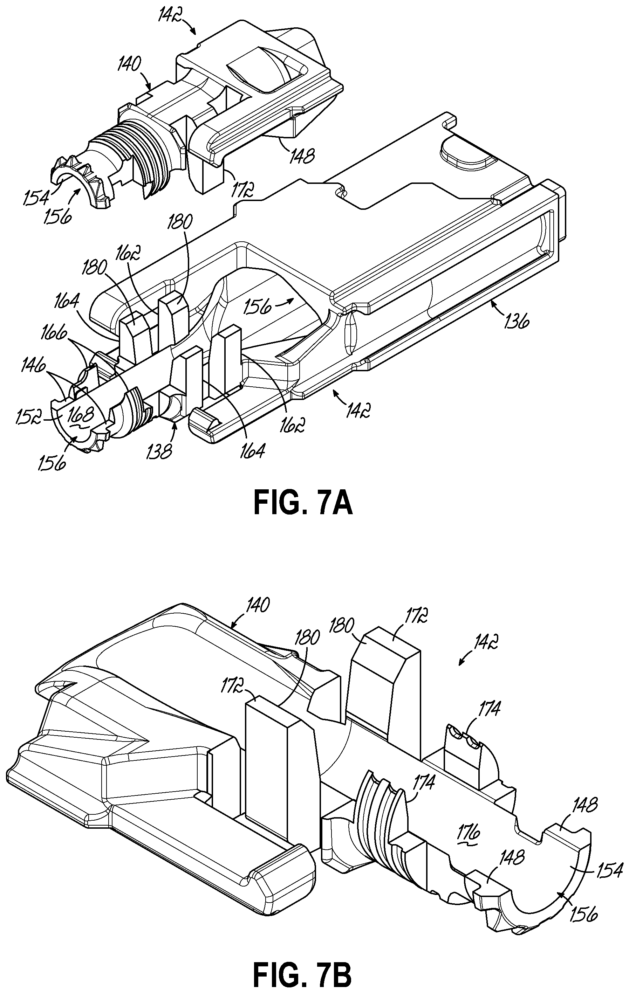

With reference to Figs. 7A and 7B, a first crimp body portion 138 and a second crimp body portion 140 according to one aspect of the disclosure are shown. The first crimp body portion 138 and the second crimp body portion 140 may be used with the other components 82, 88, 90, 92, 94, 96 to form a fiber optic connector which is similar in some respects to the fiber optic connector 72. In that regard, a housing assembly, similar in some respects to the housing assembly 80, is formed when: (i) the first housing component 82 is coupled to a housing portion 136 that is defined by the first crimp body portion 138, and (ii) the second crimp body portion 140 is assembled together with the first crimp body portion 138. The first crimp body portion 138 and the second crimp body portion 140 may form a crimp body 142 when assembled together. The crimp band 94 may be used to connect the second crimp body portion 140 to the first crimp body portion 138 in the assembled configuration. Alternatively or additionally, the first crimp body portion 138 and the second crimp body portion 140 may be secured together in the assembled state by using adhesive, snap-fit features, or other means. In the embodiment shown, the first crimp body portion 138 defines the housing portion 136 that couples to the first housing component 82. This, however, is merely exemplary and the crimp body 142 may have a different design for coupling to the first housing component 82.

The first crimp body portion 138 includes a first mating surface 146 and the second crimp body portion 140 includes a second mating surface 148. The first crimp body portion 138 includes a first central passageway portion 152 and the second crimp body portion 140 includes a second central passageway portion 154. The first mating surface 146 extends along both sides of the first central passageway portion 152 and the second mating surface 148 extends along both sides of the second central passageway portion 154. The first and second mating surfaces 146, 148 may include wider areas transverse to the first and second central passageway portions 152, 154, or relatively narrow areas extending along the outer boundaries or edges of the first and second central passageway portions 152, 154. The first central passageway portion 152 and second central passageway portion 154 form a section of a central passageway 156 when the second crimp body portion 140 is assembled to the first crimp body portion 138. The central passageway 156 extends through the crimp body 142 (including the housing portion 84 defined by the first crimp body portion 138) and receives the optical fibers 130.

The first crimp body portion 138 may include one or more first guide members 162, 164, 166 extending away from the first mating surface 146 and may be disposed adjacent and aligned with an inner surface 168 of the first central passageway portion 152. For example, the one or more first guide members 162, 164, 166 may include a surface that is tangential to the inner surface 168 of the first central passageway portion 152 or otherwise smoothly intersects with the inner surface 168 of the first central passageway portion 152 (e.g., no step therebetween). The second crimp body portion 140 may also include second guide members 172, 174 extending away from the second mating surface 148 and may be disposed adjacent and aligned with an inner surface 176 of the second central passageway portion 154. Again, for example, the one or more second guide members 172, 174 may include a surface that is tangential to the inner surface 176 of the second central passageway portion 154 or otherwise smoothly intersects with the inner surface 176 of the second central passageway portion 154. One or more of the first and/or second guide members 162, 164, 172 may include a chamfered portion 180 proximate the top or tip end of those guide members 162, 164, 172 sloping inwardly towards the first and second central passageway portions 152, 154, respectively. The chamfered portions 180 of first guide members 162, 164 may help guide or funnel the optical fibers 130 into the first central passageway portion 152 when the optical fibers 130 are loaded into the first crimp body portion 138. The chamfered portion 180 on second guide member 172 may help push the optical fibers 130 more towards the first central passageway portion 152 as the second crimp body portion 140 is being assembled to the first crimp body portion 138.

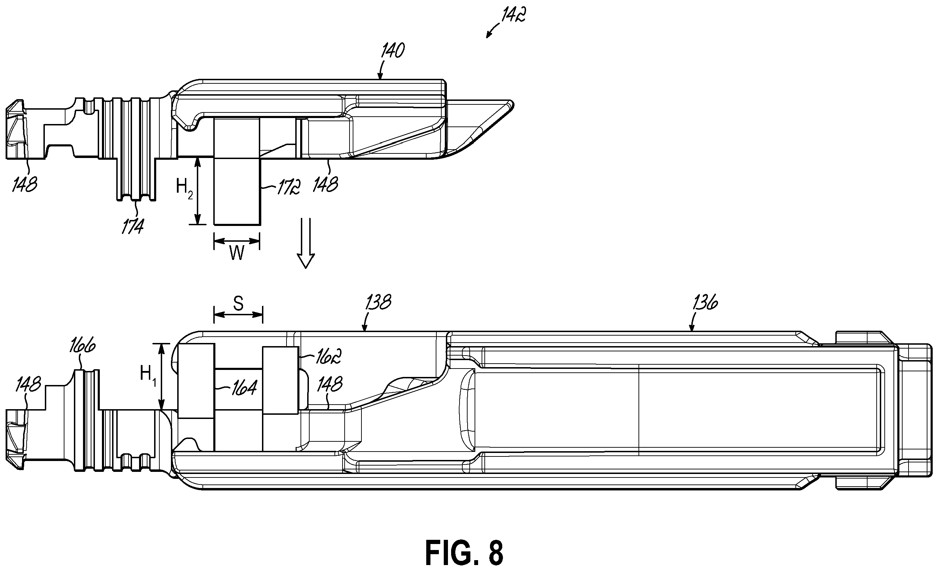

As shown in Fig. 8, the first guide members 162, 164 have a height H₁ and are spaced apart by a distance S. The second guide member 172 has a height H₂ and a width W, which is less that the distance S so that the second guide member 172 may fit between the first guide members 162, 164 when the second crimp body portion 140 is coupled to the first crimp body portion. In one embodiment, the height H₁ may be equal to height H₂. The distance S may be selected so that it is less than 10 mm, preferably less than 5 mm, and more preferably less than 2 mm. As the distance S changes, the width W will also need to change so the guide member 172 may fit between the guide members 162, 164. The distance S may be chosen such that the optical fibers 130 may not overlie the first mating surface 146 between the first guide members 162, 164 as the optical fibers 130 are placed into the first central passageway portion 152.

The objective is to prevent the optical fibers 130 from extending beyond the outer boundaries or edges of the first central passageway portion 152 as the optical fibers 130 are placed into the first central passageway portion 152. The further objective is to push or urge any optical fibers that might be overlying the first mating surface 146 toward the first central passageway portion 152 as the first crimp body portion 138 and the second crimp body portion 140 are assembled. This might be achieved by a wide combination of first and second guide members arranged on the first and second mating surfaces 146, 148, respectively. For example, the first mating surface 146 may include at least one first guide member on one or both sides of the first central passageway portion 152. In one embodiment, there may be a plurality of first guide members on one or both sides of the first central passageway portion 152. Similarly, the second mating surface 148 may include at least one second guide member on one or both sides of the second central passageway portion 154. In one embodiment, there may be a plurality of second guide members on one or both sides of the second central passageway portion 154. In these embodiments, when the first and second crimp body portions 138, 140 are assembled, the first and second guide members nest or interlace with each other in an alternating fashion to effectively form a barrier along the sides of the first and second central passageway portions 152, 154 that effectively prevent the optical fibers 130 from becoming trapped between the first and second mating surfaces 146, 148.

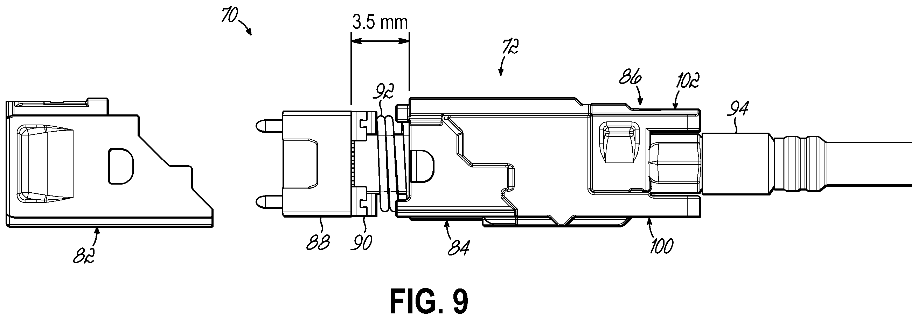

From time to time, the fiber optic connector 72 of a fiber optic cable assembly 62 may need to be repaired or reworked. To gain access to the internal components, such as the ferrule 88, the first housing component 82 may be removed from the crimp body 86. It may also be necessary to access or remove other internal components, such as the spring clamp subassembly 90 and the spring 92. Removing the first housing component 82, however, does not expose much of the internal components. As shown in Fig. 9, after the first housing component 82 is removed, there is just a few millimeters a fiber length between a rear surface of the ferrule 88 and a front surface of the housing portion 84 (e.g., approximately 3.5 mm). That small, exposed space makes it difficult to service the above-mentioned internal components. Moreover, to remove those internal components from the housing portion 84, the crimp band 94 must be removed and then reinstalled once the rework is completed. In general, repairing or reworking the fiber optic connector 72 may be time consuming and if care is not taken, the fiber optic connector 72 may be further damaged or otherwise compromised in the process.

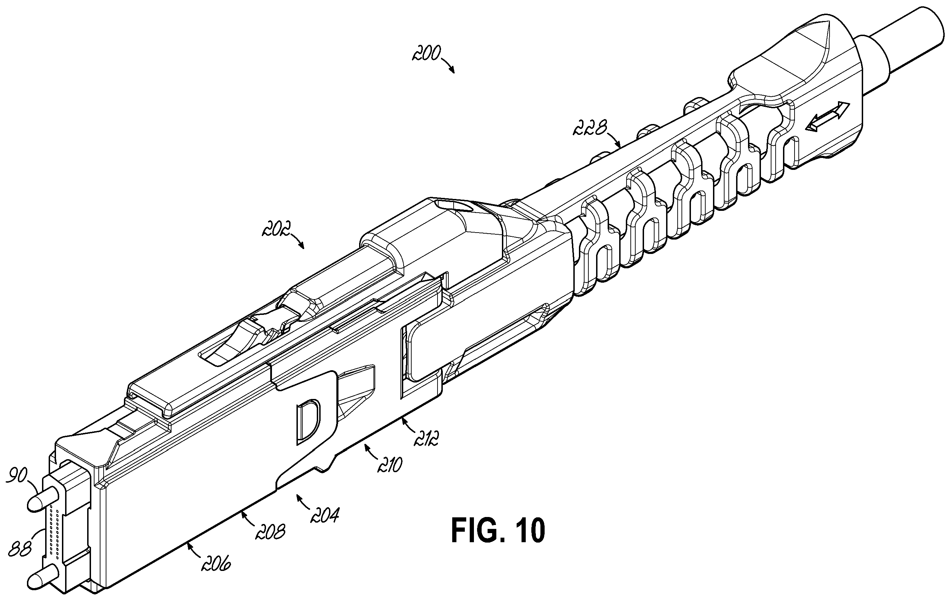

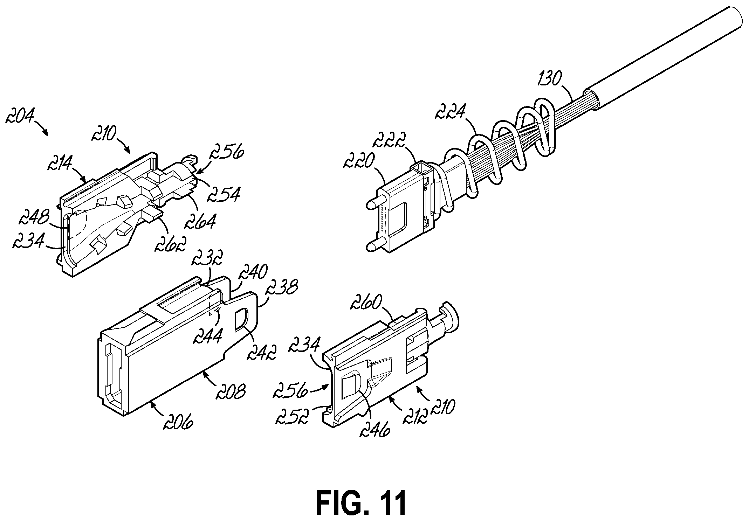

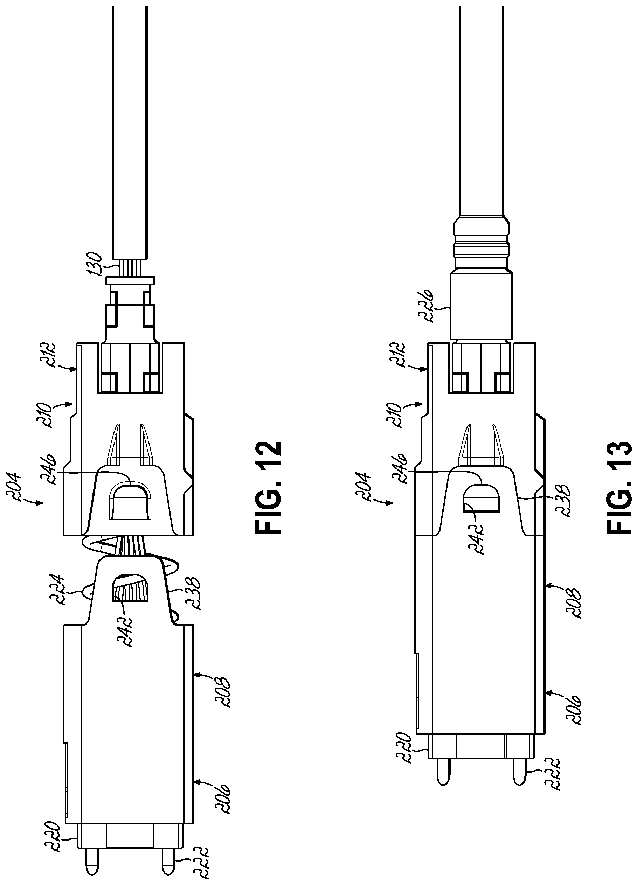

A fiber optic cable assembly 200 with a fiber optic connector 202 according to another aspect of the disclosure is shown in Fig. 10. Fig. 11 is an exploded view of the fiber optic connector 202. The fiber optic connector 202 includes a housing assembly 204 comprising a first housing component 206 (which may be referred to as a shroud 206 for the illustrated embodiment) and a crimp body 210, including first and second crimp body portions 212, 214. The fiber optic connector 202 may further include a ferrule 220, a spring clamp subassembly 222, a spring 224, a crimp band 226 (Fig. 13), and a boot subassembly 228 (Fig. 10). After the optical fibers 130 are secured to the ferrule 220 and the spring clamp subassembly 222 and spring 224 are in place, the ferrule 220 with the attached optical fibers 130 may be inserted through a rear opening 232 in the first housing component 206 and moved up to be in a front portion thereof as shown in Fig. 12. The first and second crimp body portions 212, 214 may be assembled together around the optical fibers 130 to form the crimp body 210. A recess 234 at the front of the crimp body 210 engages the rear portion of the spring 224 so that the spring 224 biases the ferrule 220 into the first housing component 206. A rear portion 208 of the first housing component may include a pair of tabs 238, 240 extending from a remainder of the rear portion 208. The tabs 238, 240 may include bores 242, 244 (e.g., blind bores or through bores) configured to receive protrusions 246, 248 on respective ones of the first and second crimp body portions 212, 214 so as to couple the first housing component 206 to the first and second crimp body portions 212, 214 as shown in Fig. 13.

The first and second crimp body portions 212, 214 include respective first and second central passageway portions 252, 254 that form a central passageway 256 when the first and second crimp body portions 212, 214 are assembled together to from the crimp body 210. The first and second crimp body portions 212, 214 may include first and second guide members 260, 262, 264 that are adjacent and aligned with the first and second central passageway portions 252, 254. The first and second guide members 260, 262, 264 help keep the optical fibers 130 in the respective first and second central passageway portions 252, 254 as the first and second crimp body portions 212, 214 are brought together around the optical fibers 130.

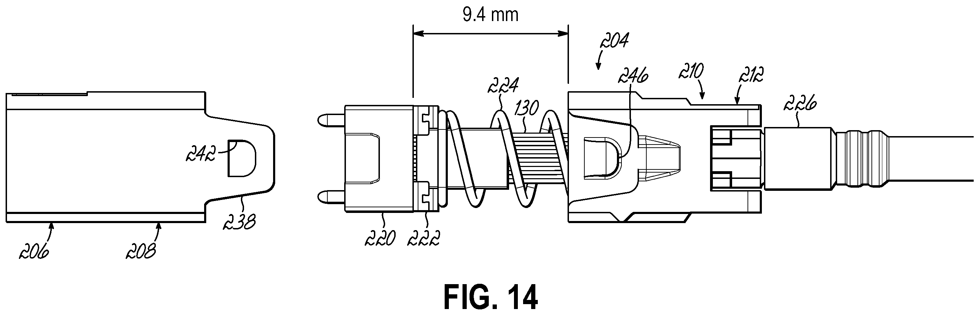

The first housing component 206 may be selectively removed from the first and second crimp body portions 212, 214 by releasing the boot subassembly 228 from the first housing component 206 and pulling the tabs 238, 240 away from the first and second crimp body portions 212, 214 such that the protrusions 246, 248 are removed from the bores 242, 244 in the tabs 238, 240. Fig. 14 shows that when the first housing component 206 is removed from the first and second crimp body portions 212, 214, a distance of around 10 mm is created between the rear surface of the ferrule 220 and the front surface of the crimp body 210. That distance provides sufficient space for a technician to repair or rework the ferrule 220 or optical fibers 130 or other components without having to remove the crimp band 226 and opening the crimp body 210, thus saving time and minimizing the risk of damaging or compromising the rest of the fiber optic connector 202. The first housing component 206 may be reconnected to the crimp body 210 in the reverse order in which the first housing component 206 was removed.

The disclosure also provides a method for making the fiber optic cable assembly 62 from the fiber optic cable 24 and the fiber optic connector 72 having the housing assembly 80 and the ferrule 88. As described above, the housing assembly 80 includes the crimp body 86 formed from the first and second crimp body potions 100, 102. The housing assembly 80 also includes the first housing component 82. The method includes securing the plurality of optical fibers 130 in the fiber optic cable 24 to the ferrule 88 and inserting the ferrule 88 through the housing portion 84 of the housing assembly 80. The plurality of optical fibers 130 are then disposed in the first central passageway portion 152 of the first crimp body portion 138. The first central passageway portion 152 includes at least one first guide member 162 which is used to urge the plurality of optical fibers 130 toward the first central passageway portion 152 as the plurality of optical fibers 130 are being disposed therein. The first crimp body portion 138 and the second crimp body portion 140 are then assembled.

In one embodiment, the second crimp body portion 140 includes at least one guide member 172 which is used to urge the plurality of optical fibers 130 toward the first central passageway portion 152 as the first crimp body portion 138 and the second crimp body portion 140 are being assembled. Assembling the first crimp body portion 138 and the second crimp body portion 140 may include applying the crimp band 94 about a portion of the crimp body 142 to connect or otherwise hold together the first crimp body portion 138 and the second crimp body portion 140 in the assembled state.

In one embodiment, the method further includes inserting the ferrule 88 in the first housing component 82 and releasably connecting the first housing component 82 to the crimp body 142.

The disclosure further provides a method of performing maintenance on the fiber optic cable assembly 200 that has the fiber optic cable 24 carrying a plurality of optical fibers 130 and the fiber optic connector 202 having the housing assembly 204 and the ferrule 220. The housing assembly 204 includes the first housing component 206 and the crimp body 210 releasably connected together, and the crimp body is formed from the first crimp body portion 212 and the second crimp body portion 214 being assembled together. The method includes disconnecting the first housing component 206 from the crimp body 210 to expose a length of optical fibers 130 greater than about six millimeters, and preferably greater than about nine millimeters, between a rear of the ferrule 220 and a front of the crimp body 210. The method further includes performing a rework step that includes any one or more of the following: polishing the ferrule 220, accessing the exposed length of optical fibers 130, or removing internal components of the fiber optic connector 202 that are positioned between the ferrule 220 and the crimp body 210 (e.g., the spring clamp subassembly 90 and/or the spring 92). The method the also includes and reconnecting the first housing component 206 to the crimp body 210. In an embodiment, the crimp band 226 is not removed from the crimp body 210 when performing the rework step.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A fiber optic cable assembly, comprising:
a fiber optic cable carrying a plurality of optical fibers, the fiber optic cable having an end; and
a fiber optic connector installed on the end of the fiber optic cable, the fiber optic connector comprising a ferrule to which the plurality of optical fibers are secured and a crimp body to which the end of the fiber optic cable is secured;
wherein:
the crimp body includes a first crimp body portion and a second crimp body portion assembled together to form the crimp body, and
the first crimp body portion and the second crimp body portion have a respective first mating surface and a second mating surface that are in contact or near contact when the first crimp body portion and the second crimp body portion are assembled,
the first crimp body portion includes a first passageway portion adjacent the first mating surface and the second crimp body portion includes a second passageway portion adjacent the second mating surface,
the first passageway portion and the second passageway portion form a crimp body passageway when the first crimp body portion and the second crimp body portion are assembled, the plurality of optical fibers extending through the crimp body passageway to the ferrule, and
the first mating surface includes at least one first guide member extending away from the first mating surface, the at least one first guide member aligned with an inner surface of the first passageway portion so as to prevent one or more of the plurality of optical fibers from being clamped between the first and second mating surfaces when the first crimp body portion and the second crimp body portion are assembled.

2. The fiber optic cable assembly of claim 1, wherein the at least one first guide member includes a plurality of first guide members, the plurality of first guide members being spaced from each other on the first mating surface.

3. The fiber optic cable assembly of claim 2, wherein the first mating surface includes a first mating surface portion extending along a first side of the first passageway portion and a second mating surface portion extending along a second side of the first passageway portion, and wherein the first mating surface portion includes at least one of the plurality of first guide members and the second mating surface portion includes at least one of the plurality of first guide members.

4. The fiber optic cable assembly of claim 3, wherein at least one of the first mating surface portion and the second mating surface portion includes a plurality of first guide members, and wherein adjacent ones of the plurality of first guide members on the at least one of the first mating surface portion and the second mating surface portion are spaced apart a distance less than or equal to about two millimeters.

5. The fiber optic cable assembly of any of the preceding claims, wherein the at least one first guide member includes a surface that smoothly intersects with the inner surface of the first passageway portion.

6. The fiber optic cable assembly of any of the preceding claims, wherein the at least one first guide member includes a chamfer.

7. The fiber optic cable assembly of any of the preceding claims, wherein the at least one first guide member has a height and the plurality of optical fibers each have a diameter, and wherein the height of the at least one first guide member is at least three times the diameter of the plurality of optical fibers.

8. The fiber optic cable assembly of any of the preceding claims, wherein the second mating surface includes at least one second guide member extending away from the second mating surface, the at least one second guide member aligned with an inner surface of the second passageway portion so as to prevent one or more of the plurality of optical fibers from being clamped between the first and second mating surfaces when the first crimp body portion and the second crimp body portion are assembled.

9. The fiber optic cable assembly of claim 8, wherein the at least one second guide member includes a plurality of second guide members, the plurality of second guide members being spaced from each other on the second mating surface.

10. The fiber optic cable assembly of claim 9, wherein the second mating surface includes a third mating surface portion extending along a first side of the second passageway portion and a fourth mating surface portion extending along a second side of the second passageway portion, and wherein the third mating surface portion includes at least one of the plurality of second guide members and the fourth mating surface portion includes at least one of the plurality of second guide members.

11. The fiber optic cable assembly of claim 10, wherein at least one of the third mating surface portion and the fourth mating surface portion includes a plurality of second guide members, and wherein adjacent ones of the plurality of second guide members on the at least one of the third mating surface portion and the fourth mating surface portion are spaced apart a distance less than or equal to about two millimeters.

12. The fiber optic cable assembly of any of claims 8-11, wherein when the first crimp body portion and the second crimp body portion are assembled, each of the at least one first guide member is adjacent to at least one of the at least one second guide member.

13. The fiber optic cable assembly of any of the preceding claims, wherein the fiber optic connector further includes a first housing component coupled to the crimp body, and wherein the first housing component and the crimp body define a housing assembly.

14. The fiber optic cable assembly of claim 13, wherein the first housing component is releasably connected to the crimp body, and wherein when the first housing component is removed from the crimp body, a rear surface of the ferrule is at least six millimeters and preferably at least nine millimeters from a front surface of the crimp body.

15. The fiber optic cable assembly of claim 13 or 14, wherein one of the first housing component or the crimp body includes at least one tab having a bore and the other of the first housing component or the crimp body includes at least one protrusion, and wherein the at least one protrusion engages the bore on the at least one tab to couple the first housing component and the crimp body together.
